# EUROPÄISCHE PATENTANMELDUNG

(11) **EP 1 972 299 A2**
(43) Veröffentlichungstag der Anmeldung: **24.09.2008**
(21) Anmeldenummer: 08004319.3
(22) Anmeldetag: 08.03.2008
(51) Int. Cl.: A61C 13/12, A61C 19/00

(54) **Dentalgeräteumhausung**

(30) Priorität: 19.03.2007 DE 102007013701
(71) Anmelder: Renfert GmbH, 78247 Hilzingen (DE)
(72) Erfinder: Goldhagen, Sven, 78224 Singen (DE); Bertiller, Marco, 88690 Uhldingen-Mühlhofen (DE)
(74) Vertreter: Daub, Thomas

(57) **Zusammenfassung**

Die Erfindung geht aus von einer Dentalgeräteumhausung mit einer Umhausungseinheit, die zumindest einen Aufnahmebereich zumindest im Wesentlichen umhüllt.

Es wird vorgeschlagen, dass die Umhausungseinheit zumindest drei Baueinheiten aufweist, von denen jede den Aufnahmebereich in zumindest eine Richtung zumindest im Wesentlichen abdeckt.

## Beschreibung

### Stand der Technik

Die Erfindung geht aus von einer Dentalgeräteumhausung nach dem Oberbegriff des Anspruchs 1.

Aus der Druckschrift DE 44 42 262 C2 ist eine Dentalgeräteumhausung mit einer Umhausungseinheit, die zumindest einen Aufnahmebereich zumindest im Wesentlichen umhüllt, bekannt. Die Umhausung besteht aus einer Bodeneinheit und einer Umfangswand, die die Umhausung in vier Richtungen abschließt.

### Vorteile der Erfindung

Die Erfindung geht aus von einer Dentalgeräteumhausung mit einer Umhausungseinheit, die zumindest einen Aufnahmebereich zumindest im Wesentlichen umhüllt.

Es wird vorgeschlagen, dass die Umhausungseinheit zumindest drei Baueinheiten aufweist, von denen jede den Aufnahmebereich in zumindest eine Richtung zumindest im Wesentlichen abdeckt. Dadurch kann insbesondere ein einfacher Zugriff in den Aufnahmebereich bei der Montage erreicht werden. Es soll unter "im Wesentlichen" insbesondere verstanden werden, dass in einer in eine dieser Richtungen durchgeführten Parallelprojektion mehr als fünfzig Prozent der Projektionsfläche des Aufnahmebereichs von der Projektionsfläche der entsprechenden Baueinheit abgedeckt werden. Insbesondere kann jede Baueinheit mindestens zehn Prozent der Gesamtoberfläche der Umhausungseinheit bilden und/oder zumindest im Wesentlichen, insbesondere ganz, wenigstens eine Seite der Umhausungseinheit bilden. Eine Baueinheit kann insbesondere zusammenhängen und/oder insbesondere einteilig sein. Besonders vorteilhaft ist es, wenn die Umhausungseinheit zumindest vier Baueinheiten aufweist.

Ferner wird vorgeschlagen, dass zwei Baueinheiten den Aufnahmebereich in zwei Richtungen zumindest im Wesentlichen abdecken, welche zumindest im Wesentlichen zueinander entgegensetzt sind. Dabei soll "im Wesentlichen zueinander entgegengesetzt" insbesondere bedeuten, dass der Winkel, der durch diese Richtungen eingeschlossen wird, zwischen 160 und 200 Grad liegt. Insbesondere können zwei Baueinheiten einander gegenüberliegen und/oder auf zwei entgegengesetzten Seiten angeordnet sein. Dies kann insbesondere die Montage vereinfachen.

In einer bevorzugten Ausgestaltung der Erfindung weist die Umhausungseinheit zumindest zwei im Wesentlichen baugleiche Baueinheiten auf. Dabei soll "im Wesentlichen baugleich" bedeuten, dass wenigstens achtzig Prozent der Oberfläche der einen Baueinheit identisch an der anderen Baueinheit vorhanden sind. Dadurch können insbesondere die Herstellung der Umhausung vereinfacht und die Herstellungskosten gesenkt werden.

Außerdem wird vorgeschlagen, dass zumindest eine Baueinheit der Umhausungseinheit zumindest im Wesentlichen spiegelsymmetrisch ausgebildet ist. Dabei soll "im Wesentlichen spiegelsymmetrisch" insbesondere bedeuten, dass es zumindest eine Ebene gibt, die in folgender Weise eine Spiegelebene für die Baueinheit ist: Wird ein Teil der Baueinheit, der in einem der durch die Ebene definierten Halbräume liegt, an der Ebene gespiegelt, so fallen zumindest achtzig Prozent der Oberfläche des Spiegelbildes mit der Oberfläche des anderen Teiles der Baueinheit zusammen. Dies kann insbesondere bewirken, dass die Herstellungskosten der Baueinheit gesenkt werden.

In einer bevorzugten Ausgestaltung der Erfindung ist zumindest eine Baueinheit der Umhausungseinheit zumindest teilweise wenigstens aus Kunststoff und/oder einem gummiartigen Material ausgebildet. Dabei soll gummiartiges Material" insbesondere bedeuten, dass das Material wenigstens teilweise Gummi enthält und/oder sich zumindest teilweise sich im Hinblick auf die Elastizität wie Gummi verhält. Dadurch kann insbesondere eine einfache und kostengünstige Herstellung erreicht werden.

Ferner wird vorgeschlagen, dass zumindest eine Baueinheit der Umhausungseinheit zumindest teilweise aus Metall und/oder einer Legierung besteht. Damit kann insbesondere eine hohe Stabilität der Umhausungseinheit erreicht werden.

Vorzugsweise weist die Umhausungseinheit zumindest eine Baueinheit auf, die wenigstens zwei aufeinander folgende Kantungen in eine Richtung aufweist. Hierbei soll unter Kantung" eine Linie verstanden werden, an der zwei Flächen aneinander stoßen, die einen Winkel einschließen, der entweder zwischen null und hundertneunundsiebzig oder zwischen hunderteinundachtzig und dreihundertsechzig Grad liegt, oder insbesondere entweder zwischen null und hundertfünfundsiebzig oder zwischen hundertfünfundachtzig und dreihundertsechzig, oder besonders vorteilhaft entweder zwischen null und hundertfünfundsechzig oder zwischen hundertfünfundneunzig und dreihundertsechzig. Außerdem soll "zwei aufeinander folgende Kantungen in eine Richtung" bedeuten, dass zwei Kantungen, auf denen sich jeweils zumindest ein Punkt finden lässt, so dass es ein Kurvenstück auf der Oberfläche der Baueinheit gibt, das die Punkte verbindet und weder einen Punkt einer dritten Kantung enthält noch über eine abgerundete Kantung führt, jeweils zwei anliegende Flächen haben, welche von der Fläche, die das Kurvenstück enthält, zur zweiten Fläche hin gemessen einen Winkel einschließen, der für beide Kantungen entweder zwischen null und hundertneunundsiebzig oder zwischen hunderteinundachtzig und dreihundertsechzig Grad liegt, oder insbesondere entweder zwischen null und hundertfünfundsiebzig oder zwischen hundertfünfundachtzig und dreihundertsechzig, oder besonders vorteilhaft entweder zwischen null und hundertfünfundsechzig oder zwischen hundertfünfundneunzig und dreihundertsechzig. Dies kann insbesondere die Herstellung zumindest einer Baueinheit vereinfachen, und zwar insbesondere, wenn zumindest ein Großteil der Kantungen entsprechend ausgeführt ist.

Vorzugsweise weist die Umhausungseinheit zumindest eine Baueinheit auf, die wenigstens zwei aufeinander folgende und weitgehend parallele Kantungen aufweist. Dabei soll "weitgehend parallele Kantungen" insbesondere bedeuten, dass es zu einer der Kantungen eine parallele Gerade gibt, die die zweite Kantung schneidet und mit dieser einen spitzen Winkel einschließt, der zwischen null und vierzig Grad liegt, insbesondere zwischen null und fünfzehn Grad liegt, oder besonders vorteilhaft zwischen null und fünf Grad liegt. Damit kann insbesondere die Herstellung vereinfacht und die Herstellungskosten gesenkt werden, insbesondere wenn alle Kantungen zumindest einer Baueinheit der Umhausungseinheit, die aufeinander folgen, weitgehend parallel zueinander sind.

Weiterhin wird vorgeschlagen, dass die Umhausungseinheit eine Baueinheit aufweist, die als Platte ausgebildet ist. Mit "Platte" soll hierbei insbesondere eine Baueinheit gemeint sein, deren Oberfläche sich zu mindestens siebzig Prozent in einer Ebene und/oder einer weiteren, zur ersteren parallelen Ebene erstreckt. Insbesondere kann diese Platte eine Abstelleinheit aufweisen, welche eine Vorrichtung darstellen soll, die dazu vorgesehen ist, Lagerkräfte der Umhausungseinheit auf einer korrespondierenden Aufstellfläche aufzunehmen. Insbesondere kann die Platte eine Verbindungseinheit aufweisen, die dazu vorgesehen ist, die Platte durch eine Schraubverbindung mit einer weiteren Baueinheit zu verbinden. Damit kann die Produktion zumindest einer Baueinheit vereinfacht werden.

Vorteilhaft ist die Verwendung von zumindest zwei Baueinheiten der Umhausungseinheit, die zur Erzielung einer Rastverbindung vorgesehen sind. Diese können insbesondere zumindest einen Rastarm aufweisen. Damit kann insbesondere eine werkzeuglose Montage erreicht werden.

Ferner wird vorgeschlagen, dass zumindest eine Baueinheit der Umhausungseinheit zumindest eine Nut und zumindest eine Baueinheit der Umhausungseinheit zumindest eine Feder enthalten, die zur Erzielung einer Verbindung vorgesehen sind. Dies kann den Aufwand bei der Montage vermindern.

Die erfindungsgemäße Umhausung eignet sich insbesondere für den Einsatz bei einer Dentalrüttelvorrichtung. Der Einsatz bei weiteren, dem Fachmann als sinnvoll erscheinenden Dentalgeräten ist ebenfalls denkbar.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines Dentalrüttelgeräts,
- Fig. 2: eine Ansicht einer Umhausungseinheit von unten,
- Fig. 3: eine Seitenansicht einer Baueinheit,
- Fig. 4: eine Ansicht einer Baueinheit von unten,
- Fig. 5: eine Seitenansicht einer Baueinheit und
- Fig. 6: eine Ansicht einer Baueinheit von unten.

### Beschreibung des Ausführungsbeispiels

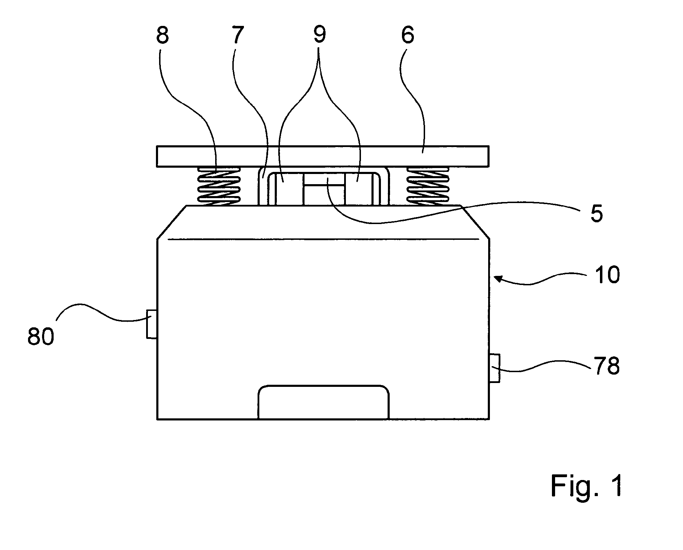

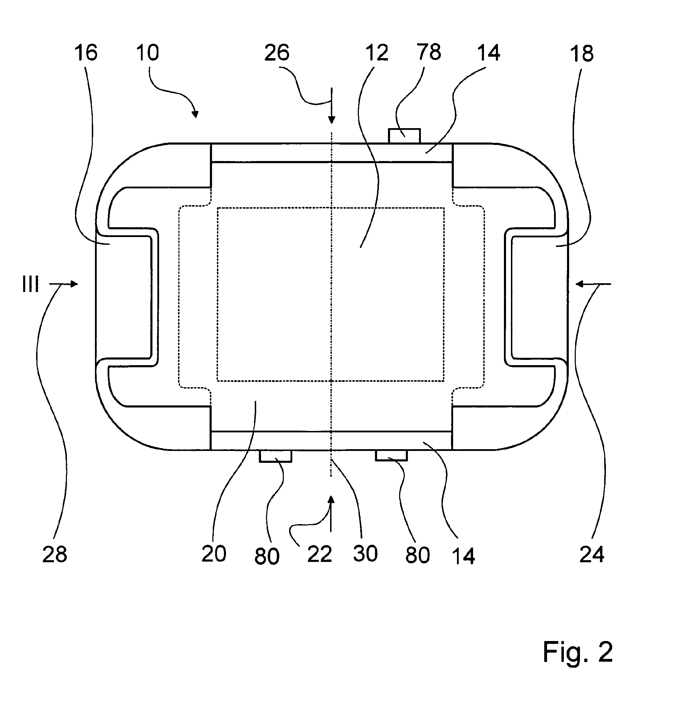

Figur 1 zeigt ein Dentalrüttelgerät in einer Seitenansicht. Es weist eine Umhausungseinheit 10 auf, an der eine Federeinheit 8 derart befestigt ist, dass eine Schwingplatte 6 Schwingungen relativ zur Umhausungseinheit 10 ausführen kann. Die Umhausungseinheit 10 weist Befestigungsmittel 78, 80 auf, die zur Befestigung von elektrischen Bauelementen vorgesehen sind. Auf die Schwingplatte 6 kann ein Mischgutträger aufgebracht werden. Die Schwingungen werden von einer Spule, die sich in einem Aufnahmebereich 12 (siehe Figur 2) befindet, welcher von der Umhausungseinheit umhüllt wird, angeregt, indem diese ein Eisenjoch 5 periodisch anzieht. Die Spule ist mit Hilfe von Gummielementen 9 und eines Bügels 7 an der Schwingplatte 6 befestigt.

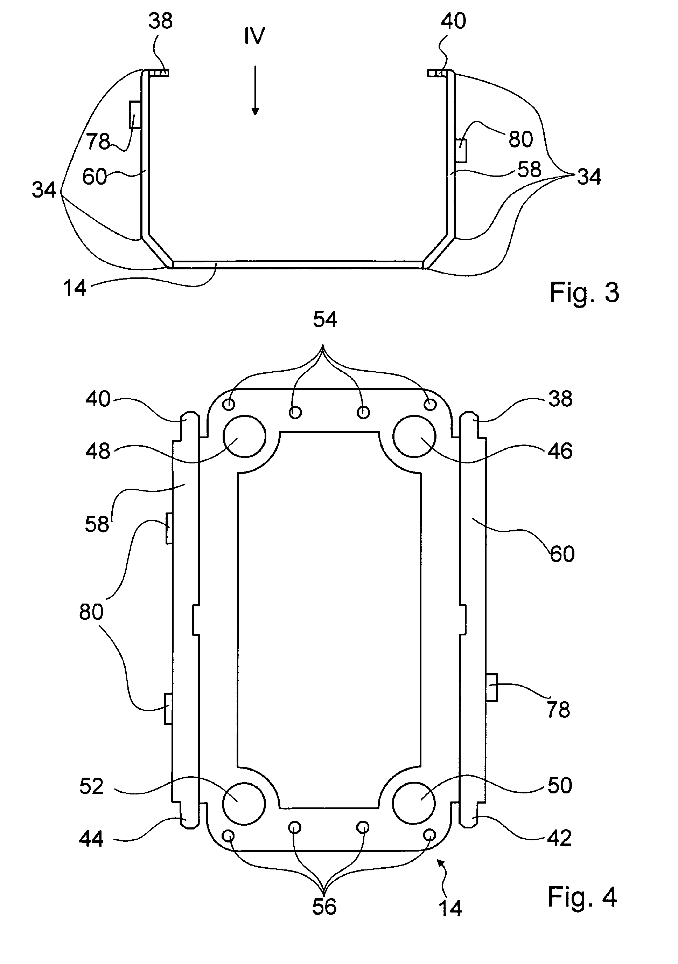

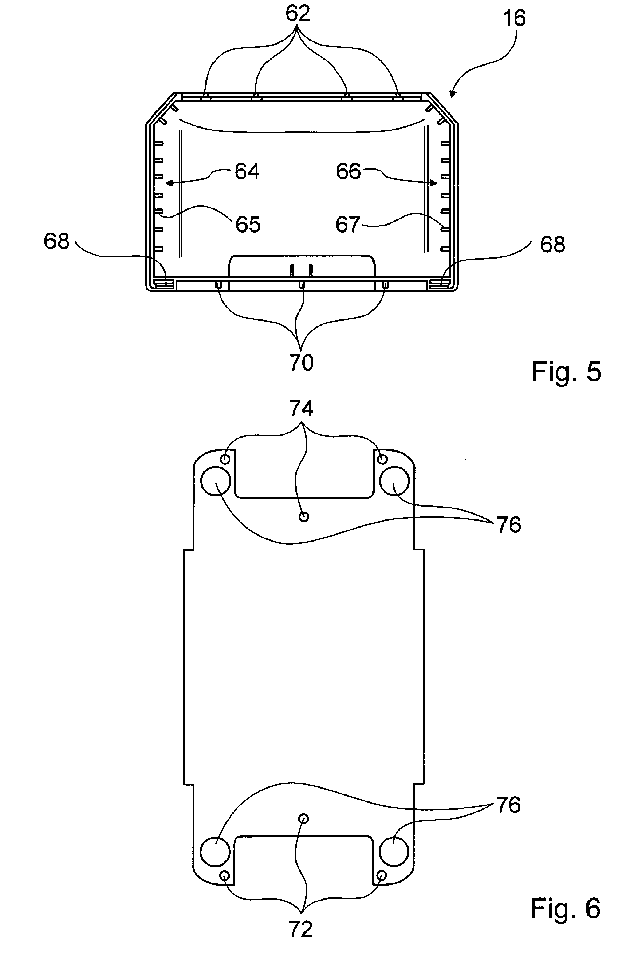

Figur 2 zeigt eine Ansicht der Umhausungseinheit 10 von unten. Die Umhausungseinheit 10 umhüllt im Wesentlichen den Aufnahmebereich 12. Die Umhausungseinheit 10 weist vier Baueinheiten 14, 16, 18 und 20 auf. Die Baueinheit 14 ist aus Metall ausgebildet. Die Baueinheit 14 weist die Befestigungsmittel 78, 80 auf, die zur Befestigung von elektrischen Bauelementen vorgesehen sind. Die Baueinheiten 16 und 18 sind aus Kunststoff ausgebildet und können mittels einer Nut-Feder-Verbindung an die Baueinheit 14 angefügt werden. Die Baueinheit 20, welche als Metallplatte ausgebildet ist (siehe Figur 6), ist mittels einer Schraubenverbindung an die Baueinheiten 16 und 18 fixiert. Die Umhausungseinheit 10 weist eine Längsrichtung auf, die mit Richtungen 24 und 28 identisch ist. Senkrecht zu den Richtungen 24, 28 erstreckt sich eine Querrichtung, die mit Richtungen 22 und 26 identisch ist. Der Aufnahmebereich 12 ist deshalb im Wesentlichen quaderförmig. Die Baueinheit 16 deckt den Aufnahmebereich 12 im Wesentlichen in die Richtung 28 ab, Baueinheit 18 im Wesentlichen in die Richtung 24, Baueinheit 14 im Wesentlichen in die Richtungen 22 und 26 und die Baueinheit 20 im Wesentlichen in Blickrichtung. Die Baueinheiten 16 und 18 sind baugleich und einander entgegengesetzt. Außerdem gehen die Baueinheiten 16 und 18 durch Spiegelung an der Ebene 30 auseinander hervor. Ferner ist die Baueinheit 14 im Wesentlichen spiegelsymmetrisch mit der Ebene 30 als Spiegelebene ausgebildet. In einer Seitenansicht in der Richtung 28 weist die Baueinheit 14 U-Form auf (siehe Figur 3).

Figur 3 zeigt eine Seitenansicht alleinig der Baueinheit 14 in die Richtung 28. Die Baueinheit 14 weist in dieser Ansicht eine U-Form auf, die dadurch zustande kommt, dass sämtliche aufeinander folgende Kantungen 34 immer in die gleiche Richtung erfolgen, das heißt, dass vom Aufnahmebereich 12 aus gesehen die Kantungen immer einen Winkel kleiner als hundertachtzig Grad aufweisen. Ferner folgen die Kantungen 34 der Baueinheit 14 aufeinander und sind weitgehend parallel zueinander. Da die Baueinheit 14 in der betrachteten Seitenansicht U-Form aufweist, weist sie in derselben Ansicht auch Schenkel 58, 60 auf, welche an ihren Enden Federn 40 und 38 aufweisen. Ferner weist die Baueinheit 14 Befestigungsmittel 78, 80 auf, die zur Befestigung von elektrischen Bauelementen vorgesehen sind (siehe auch Figur 4).

Figur 4 zeigt eine Ansicht der Baueinheit 14 von unten. Sie weist an den Enden der Schenkel 58, 60 die Federn 38, 40 auf und auf der gegenüberliegenden Seite in der Richtung 28 weist sie ferner Federn 42 und 44 auf. Die Federn 38, 40, 42 und 44 sind zur Bildung einer Feder-Nut-Verbindung mit den Baueinheiten 16 und 18 vorgesehen. Des Weiteren weist die Baueinheit 14 Befestigungsmittel 46, 48, 50 und 52 auf, die zur Befestigung der Federeinheit 8 vorgesehen sind (siehe Figur 1). Ausnehmungen 54 und 56 sind dazu vorgesehen, mit entsprechenden Rastarmen Rastverbindungen zu bilden.

Figur 5 zeigt Baueinheit 16 in der Richtung 24 bzw. Baueinheit 18 in der Richtung 28, wobei die jeweilige Baueinheit in beiden Fällen vom Aufnahmebereich 12 aus betrachtet wird. Rastelemente 62 sind dazu vorgesehen, mit den Ausnehmungen 54 bzw. 56 eine Rastverbindung zu bilden (siehe Figur 4). Ebenso sind Rasteinheiten 64 bzw. 66, die aus Rastelementen 65 bzw. 67 bestehen, dazu vorgesehen, mit den Schenkeln 58 und 60 eine Rastverbindung zu bilden (siehe Figur 3). Nute 68 sind dazu vorgesehen, mit den Federn 38, 40 bzw. 42, 44 Nut-FederVerbindungen zu bilden (siehe Figur 4). Mit Hilfe von Muttern 70 und entsprechenden Schrauben kann die Baueinheit 20 mittels Ausnehmungen 72 bzw. 74 an die Baueinheiten 16 und 18 angeschraubt werden (siehe Figur 6).

Figur 6 zeigt die Baueinheit 20 von unten. Ausnehmungen 76 sind zum Anbringen einer Vorrichtung vorgesehen. Die Ausnehmungen 72 und 74 sind zur Fixierung der Baueinheit mit Hilfe von Schrauben und Muttern vorgesehen.

Bei der Montage der Umhausungseinheit 10 werden die Baueinheiten 16 und 18 unter anderem mit Hilfe der Rastelemente 62 und ihrer Gegenstücke, nämlich der Ausnehmungen 54 und 56, jeweils mit Baueinheit 14 verbunden. Zur Verbindung der Baueinheften 16 und 18 mit Baueinheit 14 tragen ferner die Nute 68 und die Federn 38, 40, 42 und 44 bei. Ebenfalls tragen zur Verbindung der Baueinheiten 16 und 18 mit Baueinheit 14 die Schenkel 58, 60 und die Rasteinheiten 64 und 66 bei. Nachdem die Baueinheiten 16 und 18 an die Baueinheit 14 anmontiert ist, kann die Baueinheit 20 mit Hilfe der Muttern 70, der Ausnehmungen 72 und 74 und von entsprechenden Schrauben an die Baueinheiten 16 und 18 angeschraubt werden.

### Bezugszeichen

- 5: Eisenjoch
- 6: Schwingplatte
- 7: Bügel
- 8: Federeinheit
- 9: Gummielemente
- 10: Umhausungseinheit
- 12: Aufnahmebereich
- 14: Baueinheit
- 16: Baueinheit
- 18: Baueinheit
- 20: Baueinheit
- 22: Richtung
- 24: Richtung
- 26: Richtung
- 28: Richtung
- 30: Ebene
- 34: Kantungen
- 38: Feder
- 40: Feder
- 42: Feder
- 44: Feder
- 46: Befestigungsmittel
- 48: Befestigungsmittel
- 50: Befestigungsmittel
- 52: Befestigungsmittel
- 54: Ausnehmung
- 56: Ausnehmung
- 58: Schenkel
- 60: Schenkel
- 62: Rastelemente
- 64: Rasteinheit
- 65: Rastelement
- 66: Rasteinheit
- 67: Rastelement
- 68: Nute
- 70: Muttern
- 72: Ausnehmungen
- 74: Ausnehmungen
- 76: Ausnehmungen
- 78: Befestigungsmittel
- 80: Befestigungsmittel

## Patentansprüche

1. Dentalgeräteumhausung mit einer Umhausungseinheit (10), die zumindest einen Aufnahmebereich (12) zumindest im Wesentlichen umhüllt,
**dadurch gekennzeichnet,**
**dass** die Umhausungseinheit (10) zumindest drei Baueinheiten (14, 16, 18, 20) aufweist, von denen jede den Aufnahmebereich (12) in zumindest eine Richtung (22, 24, 26, 28) zumindest im Wesentlichen abdeckt.

2. Dentalgeräteumhausung nach Anspruch 1,
**dadurch gekennzeichnet,**
**dass** zwei Baueinheiten (16, 18) den Aufnahmebereich (12) in zwei Richtungen (24, 28) zumindest im Wesentlichen abdecken, welche zumindest im Wesentlichen zueinander entgegengesetzt sind.

3. Dentalgeräteumhausung nach Anspruch 2 oder 3,
**dadurch gekennzeichnet,**
**dass** zumindest zwei Baueinheiten (16, 18) der Umhausungseinheit (10) im Wesentlichen baugleich ausgebildet sind.

4. Dentalgeräteumhausung nach einem der vorhergehenden Ansprüche,
**dadurch gekennzeichnet,**
**dass** zumindest eine Baueinheit (14, 16, 18) der Umhausungseinheit (10) zumindest im Wesentlichen spiegelsymmetrisch ausgebildet ist.

5. Dentalgeräteumhausung nach einem der vorhergehenden Ansprüche,
**dadurch gekennzeichnet,**
**dass** zumindest eine Baueinheit (16, 18) der Umhausungseinheit (10) zumindest teilweise wenigstens aus Kunststoff und/oder einem gummiartigen Material gebildet ist.

6. Dentalgeräteumhausung nach einem der vorhergehenden Ansprüche,
**dadurch gekennzeichnet,**
**dass** zumindest eine Baueinheit (14, 20) der Umhausungseinheit (10) zumindest teilweise aus Metall und/oder einer Legierung gebildet ist.

7. Dentalgeräteumhausung nach einem der vorhergehenden Ansprüche,
**dadurch gekennzeichnet,**
**dass** zumindest eine Baueinheit (14) der Umhausungseinheit (10) wenigstens zwei aufeinander folgende Kantungen (34) in eine Richtung aufweist.

8. Dentalgeräteumhausung nach einem der vorhergehenden Ansprüche, **dadurch gekennzeichnet, dass** zumindest eine Baueinheit (14) der Umhausungseinheit (10) wenigstens zwei aufeinander folgende und weitgehend parallele Kantungen (34) aufweist.

9. Dentalgeräteumhausung nach einem der vorhergehenden Ansprüche,
**dadurch gekennzeichnet,**
**dass** die Umhausungseinheit (10) eine Baueinheit (20) aufweist, die als Platte ausgebildet ist.

10. Dentalgeräteumhausung nach einem der vorhergehenden Ansprüche,
**gekennzeichnet durch**
Verbindungseinheiten (54, 56, 62, 64, 66, 58, 60) an zumindest zwei Baueinheiten (14, 16, 18) der Umhausungseinheit (10), die zur Erzielung einer Rastverbindung vorgesehen sind.

11. Dentalgeräteumhausung nach einem der vorhergehenden Ansprüche,
**dadurch gekennzeichnet,**
**dass** zumindest eine Baueinheit (16, 18) der Umhausungseinheit (10) zumindest eine Nut (68) und zumindest eine Baueinheit (14) der Umhausungseinheit (10) zumindest eine Feder (38, 40, 42, 44) aufweisen, die zur Erzielung einer Verbindung vorgesehen sind.
